Europäisches Patentamt

European Patent Office

Office européen des brevets

(19)

(11) Veröffentlichungsnummer: **0 030 982**
A1

(12) # EUROPÄISCHE PATENTANMELDUNG

(21) Anmeldenummer: 79105186.5

(22) Anmeldetag: 14.12.79

(51) Int. Cl.³: **F 24 D 3/00**
F 24 B 9/00, F 23 J 15/00

(43) Veröffentlichungstag der Anmeldung:
01.07.81 Patentblatt 81/26

(84) Benannte Vertragsstaaten:
AT BE CH FR GB IT LU NL SE

(71) Anmelder: Neumann, Siegmar R.
Marsstrasse 13
D-8074 Gaimersheim(DE)

(72) Erfinder: Neumann, Siegmar R.
Marsstrasse 13
D-8074 Gaimersheim(DE)

(54) Verfahren und Vorrichtung zur Wärmerückgewinnung aus dem Rauchgas von Gebäudeheizungen und zur Reinigung der Rauchgase.

(57) Das Rauchgas wird hinter dem Heizkessel durch einen Wärmetauscher auf ca. 65°C abgekühlt, danach von 2 Filtern von allen festen Partikeln und zu ca. 40 % von Schwefelbestandteilen gereinigt und von einem mit dem Brenner synchron geschalteten Ventilator zwangsweise aus dem Schornstein gepreßt.

EP 0 030 982 A1

Verfahren und Vorrichtung zur Wärmerückgewinnung aus dem Rauchgas von Gebäudeheizungen und zur Reinigung der Rauchgase.

Die Erfindung bezieht sich auf den Bereich von Gebäudeheizungen jeder Größe, deren Rauchgastemperatur über 70$^{\circ}$ C liegt und deren Rauchgas verunreinigt ist.

Das Absenken der Rauchgastemperatur mittels Wärmetauscher wird vor allem in der Industrie durchgeführt um eine Schädigung des Schornsteins zu vermeiden.

Bekannt ist außerdem das Verfahren durch Waschen des Rauchgases dieses abzukühlen und von Schadstoffen zu befreien. Dies ist jedoch wegen der starken Verunreinigung des Kühlwassers nicht unproblematisch.

Die Anwendung dieser beiden Verfahren bei Gebäudeheizungen ist unwirtschaftlich bzw. nicht praktikabel.

Bekannt sind im Bereich Gebäudeheizungen Wärmetauscher verschiedener Ausführung, die dem Rauchgas Wärme entziehen und diese dem Heizungs- oder Brauchwasser zuführen. Alle bisher bekannten Verfahren sind jedoch wenig effektiv, da sie nur eine Rauchgasabkühlung auf bestenfalls 180$^{\circ}$ Celsius erbringen. Außerdem leisten diese Verfahren keinen Beitrag zur Reinigung der Rauchgase.

Hier will die Erfindung einen echten Fortschritt im Heizungsbau bringen. Dieser Gerätesatz wird zwischen Heizkessel und Schornstein montiert und besteht aus zwei Bausteinen mit ganz spezifischen Aufgaben:

Baustein I ist der Wärmetauscher. In einem korrosionsfesten und hitzebeständigen Gehäuse befindet sich ein ebenfalls hitze- und korrosionsfester Wärmetauscher. Dieser wird innen vom Heizungswasser durchströmt und außen vom Rauchgasstrom erwärmt. Wesentlich für dieses Verfahren ist, daß dieser Wärmetauscher ( WT )

- in den Heizungrücklauf eingebunden wird und zwar vor dem Mischer
- die gesamte Rücklaufwassermenge passieren läßt ohne einen Engpass im Rohrsystem zu bilden
- dem erforderlichen Wasserdruck standhält
- eine große Tauscherfläche auf kleinem Raum hat

- keinen nennenswerten Rauchgasstau in den Heizkessel erzeugt

- nicht schnell verschmutzt und leicht zugänglich und zu reinigen ist.

Sehr gut bewährt hat sich als WT ein handelsüblicher Röhrenradiator, der lediglich gegen Korrosion zu schützen ist.

Dieser WT entzieht dem Rauchgas alle Wärme bis auf einen Rest von rund 65° C und führt diese dem Heizungswasser zu. Wahlweise ist auch die Einbindung in ein Brauchwassersystem möglich. Je nach Höhe der ursprünglichen Rauchgastemperatur bedeutet dies einen Wärmerückgewinn bis 85 %! Das Rücklaufwasser wird im WT soweit aufgeheizt, daß eine Reduzierung der Mischerstellung um 2 - 3 Skalenwerte möglich ist. Daraus resultieren größere Einschaltpausen des Brenners und damit eine erhebliche Energieersparnis.

Baustein II ist das Filterelement: dieses Gehäuse ist zwischen WT und Schornstein in den Rauchgasstrom montiert. Es besteht aus einem hitze- und korrosionsbeständigen Material und enthält als Gehäuseinhalt folgende Bauteile :

a) 2 Spezialfilter

Diese haben zwei Aufgaben :

- Bildung eines Wärmestaus bis in den Heizkessel während der Stehzeit des Brenners. Dadurch wird der Kessel nicht so schnell ausgekühlt, die Einschaltpausen verlängern sich nochmals mit dem Ergebnis einer weiteren Energieeinsparung.

- Reinigung der Rauchgase

Feste Partikel und Derivate werden zu 100 % aufgefangen, Schwefelbestandteile zu mindestens 40 %. ( bei deutscher Heizölqualität )

Dies ist ein beachtlicher Beitrag zum Umweltschutz.

b) einen Saug - Druck - Ventilator

Dieser ist nach den Filtern angeordnet und mit dem Brenner synchron geschaltet. Bei Bedarf erhält er eine kurze Vor- und/oder Nachlaufzeit.

Dieser Ventilator hat ebenfalls zwei Aufgaben zu erfüllen :

- er unterstützt durch Sog das Ansaugen von Verbrennungsluft. Die bewirkt eine intensivere Verbrennung.

- er preßt die abgekühlten und gereinigten Rauchgase zwangsweise aus dem Schornstein und verhindert dadurch Kondensatbildung in Gerät und Schornstein.

**0030982**

Der Schornstein kann ohne negative Auswirkung im Querschnitt reduziert werden und wegen der geringen Rauchgastemperatur viel leichter als bisher üblich gebaut werden. Selbst bei Inversionswetterlagen " zieht " der Schornstein immer.

Patentansprüche :

1. Verfahren zur Wärmerückgewinnung aus dem Rauchgas von Gebäude - heizungen, gekennzeichnet dadurch, daß das Rauchgas hinter dem Heizkessel bis auf ca 65$^o$ C abgekühlt wird und die gewonnene Wärme dem Heiz - oder Brauchwasserhaushalt zugeführt wird.

2. Verfahren zur Reinigung der Rauchgase, gekennzeichnet dadurch, daß die Rauchgase zunächst auf ca 65$^o$ C abgekühlt, dann gefiltert und mittels Ventilator aus dem Schornstein gepreßt werden.

3. Vorrichtung für das Verfahren gemäß 1. und 2., gekennzeichnet dadurch, daß das Rauchgas hinter dem Heizkessel durch einen Wärmetauscher und anschließend verschiedene Filter geleitet wird, wobei ein Ventilator den notwendigen Zug schafft. Dieser Ventilator ist mit dem Brenner synchron geschaltet und hat bei Bedarf eine kurze Vor - und/oder Nachlaufzeit.

4. Vorrichtung gemäß 1. , gekennzeichnet dadurch, daß der Wärmetauscher im Falle der Einbindung in den Heizungsrücklauf vor dem Mischer montiert wird.

**Europäisches Patentamt**

# EUROPÄISCHER RECHERCHENBERICHT

Nummer der Anmeldung

EP 79 10 5186.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 4 163 430</u> (S.R. NEUMANN)<br>* ganzes Dokument *<br>-- | 1-4 |
| X | <u>DE - A1 - 2 600 974</u> (S.R. NEUMANN)<br>* ganzes Dokument *<br>-- | 1-3 |
| | <u>FR - A - 1 400 745</u> (M. HERGT)<br>* Seite 5, linke Spalte, Absatz 4;<br>Fig. 1 *<br>-- | 1,3 |
| | <u>DE - A1 - 2 813 686</u> (H. BIESTERFELDT)<br>* Seite 3, Absatz 4 *<br>-- | 3 |
| A | <u>DE - A1 - 2 735 272</u> (H. BIESTERFELDT)<br>* ganzes Dokument *<br>---- | 1 |

**KLASSIFIKATION DER ANMELDUNG (Int.Cl.³)**

F 24 D 3/00
F 24 B 9/00
F 23 J 15/00

**RECHERCHIERTE SACHGEBIETE (Int. Cl.³)**

F 23 J 15/00
F 24 B 9/00
F 24 D 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 21-07-1980 | PIEPER |

EPA form 1503.1 06.78